(19)

**Europäisches Patentamt**
**European Patent Office**
**Office européen des brevets**

(11) **EP 2 166 799 A1**

(12) **EUROPEAN PATENT APPLICATION**

(43) Date of publication:
24.03.2010 Bulletin 2010/12

(51) Int Cl.:
*H04W 48/12* (2009.01)    *H04L 29/06* (2006.01)

(21) Application number: 08164741.4

(22) Date of filing: 19.09.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(71) Applicant: **NTT DoCoMo, Inc.**
**Tokyo (JP)**

(72) Inventors:
• **Aad, Imad**
**80689, Munich (DE)**

• **Widmer, Jörg**
**81539, Munich (DE)**
• **Zugenmaier, Alf**
**81241, Munich (DE)**

(74) Representative: **Betten & Resch**
**Patentanwälte**
**Theatinerstrasse 8**
**80333 München (DE)**

Remarks:
Amended claims in accordance with Rule 137(2) EPC.

(54) **Method and apparatus for implementing a virtual network**

(57)    A network node for implementing a virtual network in which said network node offers a plurality of m service providers to which another node may connect, m being a natural number larger than zero, said service providers having correspondingly different service provider identifiers, said network node comprising:
a module for applying a plurality of k hash functions to each of said service provider identifiers, such that each of said k hash function when being applied to a certain service provider identifier points to one bit in a sequence of b bits which then is set by said module, k and m being a natural number larger than zero, said sequence of b bits thereby forming a compressed indication of the service provider identifiers offered by said network node; and a module for repeatedly transmitting a beacon comprising said compressed indication of the service provider identifiers to advertise the service providers offered by said network node.

Fig. 1

—Beacon frame body

| Order | Information | Notes |
|---|---|---|
| 1 | Timestamp | |
| 2 | Beacon interval | |
| 3 | Capability information | |
| 4 | SSID | |
| 5 | Supported rates | |
| 6 | FH Parameter Set | The FH Parameter Set information element is present within Beacon frames generated by STAs using frequency-hopping PHYs. |
| 7 | DS Parameter Set | The DS Parameter Set information element is present within Beacon frames generated by STAs using direct sequence PHYs. |
| 8 | CF Parameter Set | The CF Parameter Set information element is only present within Beacon frames generated by APs supporting a PCF. |
| 9 | IBSS Parameter Set | The IBSS Parameter Set information element is only present within Beacon frames generated by STAs in an IBSS. |
| 10 | TIM | The TIM information element is only present within Beacon frames generated by APs. |

EP 2 166 799 A1

## Description

## FIELD OF THE INVENTION

The present invention relates to a method and an apparatus for implementing a virtual network.

## BACKGROUND OF THE INVENTION

Network virtualisation splits the current networking paradigm between network providers (NP) and service providers (SP): Network providers provide the infrastructure to support one or several service operators above it, This division spreads from the core network routers to reach the leaf routers / access points (AP). The latter ones typically advertise the service providers in periodic beacons, to which mobile nodes scan before associating with a desired AP. In current virtual LANs (VLAN), APs simply send one beacon/SSID for every (virtual) service provider; or have primary SSIDs that are advertised, and secondary SSIDs for which mobile nodes send probe requests. Both solutions show basic disadvantages:

- sending one beacon / SSID for each service provider supported by the network provider wastes bandwidth, especially when the NP supports several SPs. Those SPs may be advertised, tens of times per second, during weeks/months/years, without being used by any mobile node.

- The solution that relies on beaconing primary SSIDs, and providing secondary ones "upon request", puts those probe request in contention with normal data traffic. The active requesting of secondary SSIDs, and the contention with data traffic introduces considerable delays before new associations, that are disadvantageous during roaming.

The most relevant and widely known method for virtual networks at the moment is the Cisco Virtual LAN solution. There, a primary SSID is broadcast by the AP. Once overheard by mobile stations, they send a probe request to ask if the AP supports "secondary SSIDs", i.e. the virtual networks.

This solution succeeds to support several virtual/secondary SSIDs above the primary one, while keeping backward compatibility. However, nodes have to contend to access the channel and send their probe requests, therefore delaying their association with the network.

## SUMMARY OF THE INVENTION

According to one embodiment there is provided a network node for implementing a virtual network in which said network node offers a plurality of m service providers to which another node may connect, m being a natural number larger than zero, said services belonging to different service providers and having correspondingly different service provider identifiers, said network node comprising:

a module for applying a plurality of k hash functions to each of said service provider identifiers, such that each of said k hash function when being applied to a certain service provider identifier points to one bit in a sequence of b bits which then is set by said module, k and m being a natural number larger than zero, said sequence of b bits thereby forming a compressed indication of the service provider identifiers offered by said network node; and
a module for repeatedly transmitting a beacon comprising said compressed indication of the service provider identifiers offered by said network node.

The compressed indication of service provider identifiers saves bandwidth and is backward compatible.
According to one embodiment the network node further comprises:

a module for generating a checksum using a checksum generating algorithm based on said compressed indication of the service provider identifiers, and for including said checksum into the beacon transmitted by said node.

This enables the mobile node to check whether the CSSIDs are indeed indicative of multiple service providers or not.
According to one embodiment the network node further comprises:

a module for, if a mobile node tries to connect to a service provider based on said compressed indication of the service provider identifiers as if it were an indication of a single service provider, forwarding to said mobile node by unicast an indication of the service providers which are available at said network node.

This enables backward compatibility for cases where the mobile node has no virtual network capability.
According to one embodiment there is provided a node which may connect to a network node implementing a virtual network in which said network node offers a plurality of m service providers to which said node may connect, m being a natural number larger than zero, said service providers having correspondingly different identifiers, said node comprising:

a module for overhearing beacons transmitted by said network node for advertising said plurality of service providers, wherein said network node further comprises:

a module for applying a plurality of k hash functions to the service provider identifier of the service provider to which said node wishes to connect, such that each of said k hash function when being applied to said service provider identifier points to one bit in a sequence of b bits, k and m being a natural number larger than zero comparing the bits thus being set with the corresponding bits in a sequence of b bits in the beacon received from said network node, said b bits of said beacon forming a compressed indication of the service provider identifiers offered by said network node, and if said module detects that said bits are set, concluding that the service provider corresponding to said service provider identifier is offered by said network node;

wherein said module for applying the hash functions is adapted to repeat the application of said k hash functions and said comparing of said bits for each of the service provider identifiers corresponding to a service provider to which said node wishes to connect; and

trying to establish a connection with one of the service providers for which it has been concluded that they are offered by said network node.

In this way a mobile node can be implemented which makes use of the compressed service provider identifiers.

According to one embodiment the node further comprises:

a module for identifying in the beacon received from said network node those b bits which are a compressed indication of the service provider identifiers of the service providers offered by said network node, said module being further adapted for generating a checksum using a checksum generating algorithm based on said compressed indication of the service provider identifiers, and for comparing said generated checksum with the corresponding checksum in the beacon transmitted by said node, and if the two checksums are identical, concluding that said compressed indication of the service provider identifiers is indeed an indication of a plurality of service providers.

According to one embodiment the node further comprises:

a module for, if a said node tries to connect to a service provider based on said compressed indication of the service provider identifiers as if it were an indication of a single service provider but fails since it is actually indicative of multiple service providers, receiving by said mobile node by unicast an indication of the service providers which are available at said network node from said network node.

According to one embodiment there is provided a method for implementing a virtual network in which a network node offers a plurality of m service providers to which another node may connect, m being a natural number larger than zero, said service providers having correspondingly different service provider identifiers, said method comprising:

applying a plurality of k hash functions to each of said service provider identifiers, such that each of said k hash function when being applied to a certain service provider identifier points to one bit in a sequence of b bits which then is set by said module, k and m being a natural number larger than zero, said sequence of b bits thereby forming a compressed indication of the service provider identifiers of the service providers offered by said network node; and repeatedly transmitting a beacon comprising said compressed indication of the service provider identifiers to advertise the service providers offered by said network node.

According to one embodiment the method further comprises:

generating a checksum using a checksum generating algorithm based on said compressed indication of the service provider identifiers, and for including said checksum into the beacon transmitted by said node.

According to one embodiment the method further comprises:

if a mobile node tries to connect to a service provider based on said compressed indication of the service provider identifiers as if it were an indication of a single service provider, forwarding to said mobile node by unicast an indication of the service providers which are available at said network node.

According to one embodiment there is provided a method for connecting a node to a network node implementing a virtual network in which said network node offers a plurality of m service providers to which said node may connect, m being a natural number larger than zero, said service providers having correspondingly different service provider identifiers, said method comprising:

overhearing beacons transmitted by said network node for advertising said plurality of service providers, wherein said method further comprises:

applying a plurality of k hash functions to the service provider identifier of the service provider to which said node wishes to connect, such that each of said k hash function when being applied to said service provider identifier points to one bit in a sequence of b bits, k and m being a natural number larger than zero,

comparing the bits thus being set with the corresponding bits in a sequence of b bits in the beacon received from said network node, said b bits of said beacon forming a compressed indication of the service provider identifiers of the service providers offered by said network node, and if it is detected that said bits are set, concluding that the service corresponding to said service provider identifier is offered by said network node;

repeating the application of said k hash functions and said comparing of said bits for each of the service provider identifiers corresponding to a service provider to which said node wishes to connect; and

trying to establish a connection with one of the service providers for which it has been concluded that they are offered by said network node.

According to one embodiment the method further comprises:

identifying in the beacon received from said network node those b bits which are a compressed indication of the service provider identifiers of the service providers offered by said network node,

generating a checksum using a checksum generating algorithm based on said compressed indication of the service provider identifiers,

comparing said generated checksum with the corresponding checksum in the beacon transmitted by said node, and

if the two checksums are identical, concluding that said compressed indication of the service provider identifiers is indeed an indication of a plurality of service providers.

According to one embodiment the method further comprises:

if said node tries to connect to a service provider based on said compressed indication of the service provider identifiers as if it were an indication of a single service provider but fails since it is actually indicative of multiple service providers, receiving by said mobile node by unicast an indication of the services which are available at said network node from said network node.

According to one embodiment there is provided a computer program comprising computer program code which when being executed on a computer enables said computer to carry out a method according to one of the embodiments of the invention.

## DESCRIPTION OF THE DRAWINGS

Fig. 1 schematically illustrates a service provider advertisement according to the prior art.
Fig. 2 schematically illustrates further possible service provider advertisements according to the prior art.
Fig. 3 schematically illustrates an operation of a node according to an embodiment of the invention.

## DETAILED DESCRIPTION

At fist some terms which will be used in the following description will be defined.

AP        Access Point
NP        Network Provider
SP        Service provider
SSID     Service Set IDentifier
VLAN    Virtual LAN

According to one embodiment the proposed new solution consists of aggregating the SSIDs of the SPs supported by a given NP in a Bloom filter. The Bloom filter can be thought of as a "compressed list" advertised periodically by the AP, and mobile nodes check whether their SSID is included therein.

Such an approach leads to several advantages which are listed in the following.

Since there's not one SSID per service provider to be advertised, this solution makes beaconing in virtual networks highly efficient, especially when the number of SPs is high, and when certain SPs have to be advertised but are rarely used.

Moreover, since the solution is based on passive scanning of the advertised SSID list (Bloom filter), without needing to request any secondary SSIDs, and without having to contend to access the channel, associations with new APs take shorter times, which is highly advantageous during roaming.

Furthermore the solution is backward compatible, in the sense that existing mobile nodes can still operate without requiring any updates. In order to implement the proposed approach, however, the AF's and virtual-network-capable nodes are to be updated.

Finally, the approach requires software modifications only (no hardware modifications) to existing systems.

In the following embodiments of the invention will be described in somewhat more detail. It should be mentioned in this connection that, without loss of generality, and to make the description more tangible, embodiments will be described for the case of IEEE 802.11 networks. The general concept, however, may be applied to any radio access technology.

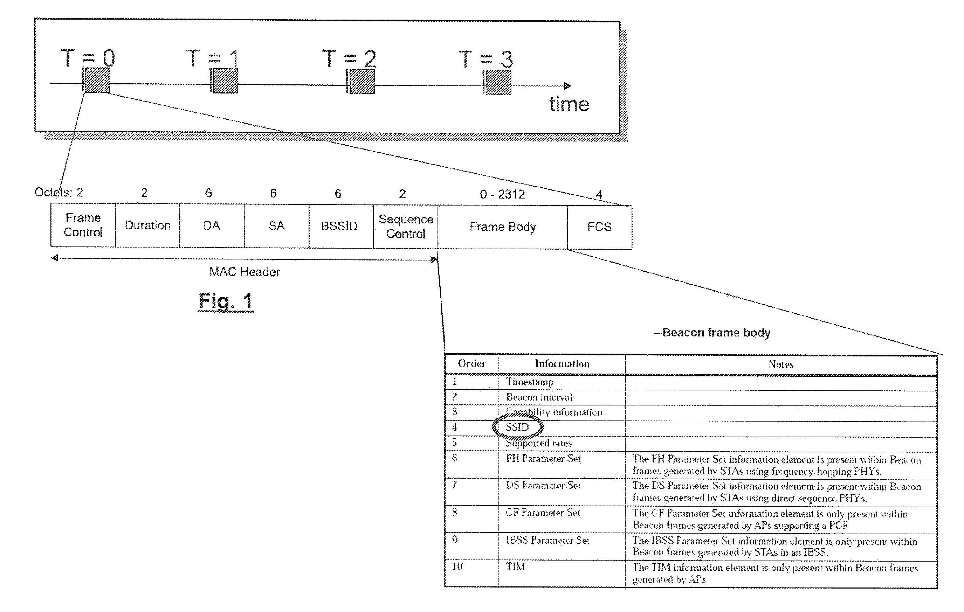

In order to help mobile nodes/phones to find the APs to which they can associate, APs periodically advertise the network IDs (SSID) inside the beacons that are transmitted regularly, typically every 100ms. Fig. 1 shows in the upper part the regular transmission of beacons at T=0, T=1, T=2, etc. The middle of Fig. 1 shows the beacon format which starts with the MAC header and is followed by the frame body of the beacon. The detailed content of the frame body of the beacon is shown in the lower part of Fig. 1. It can be seen that the item no. 4 in the beacon frame body is the SSID which in an embodiment of the invention advertises the ID of the NP.

When overhearing those beacons mobile nodes are able to find new networks, estimate the link qualities to each of those, and to decide whether to associate or not to the new network/AP.

Without supporting virtualisation, most of the currently deployed APs are operated by separate individual network providers. However this solution is showing to be costly and suboptimal in scenarios where several operators coexist:

- Sharing the radio resources becomes problematic, considering the low number of non-interfering channels
- Installing multiple APs in a given area (e.g. airport) may become cumbersome, undesirable
- Each operator typically has low usage, making the radio channel and the infrastructure installation costly

The current trend is to make a networks provider (NP), that actually owes the network infrastructure, support several service providers (SPs) that provide the actual services to their customers. This separation concept spreads from the core of the network to the end routers/APs. This concept is highly appreciated by network and service operators that can make more benefit of the infrastructure, while using the bandwidth (radio or wired) more efficiently. The concept is called "virtual networks", and is a basic component of the Future Internet.

Just like in tne current widely spread radio networks, a network provider's AP nas to advertise the network identifiers regularly using its beacons. Those beacons contain the SSIDs (Service Set Identifiers) of the supported SPs which mobile nodes can overhear and then associate to the desired AP.

If an AP now wishes to advertise multiple service providers (not only the network provider NP), one could imagine several solutions to this problem.

The very intuitive solution which keeps the network and mobile nodes backward compatible would be to keep one SSID per beacon. For a given SSID of a SP, the beacon interval can be maintained as for non-virtual networks. Therefore, for n SPs, the beacons density is just increased n times, thereby reducing the bandwidth available for the actual data traffic considerably.

The other option would be to keep transmit the beacons at the same rate as for non-virtual networks: a given SP's SSID is therefore broadcast every n beacon period. If the network provider supports a high number (n) of service providers, it may take a long while until a given SSID is broadcast again. This results in long delays until a mobile node finds the desired network to which it wants to associate, A situation highly undesirable while roaming.

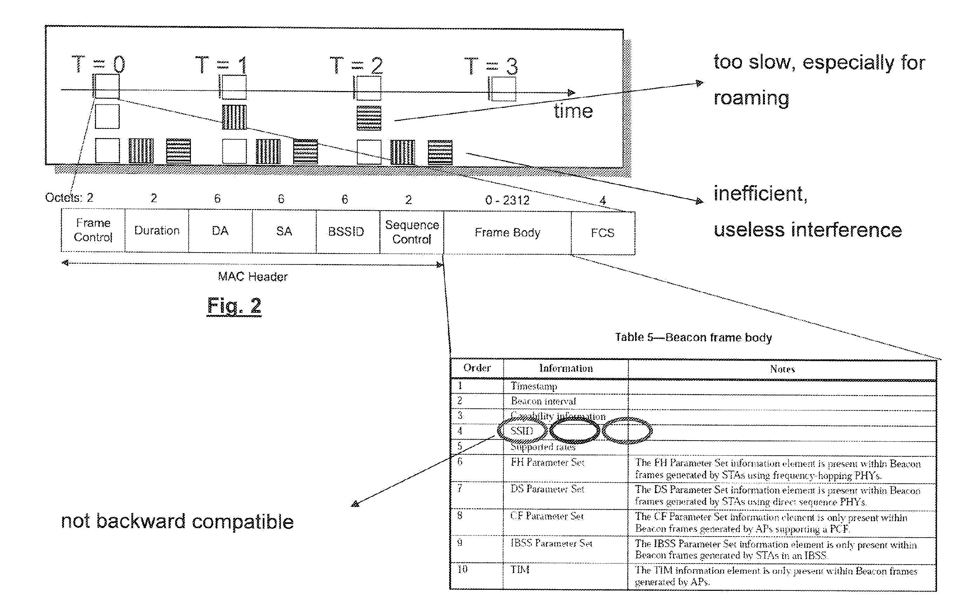

The two possible solutions are schematically illustrated in Fig. 2. Fig. 2 in its upper part shows three ways how the timing of beacons can be organised. At times T=0, T=1, T=2, and T=3 there are indicated the beacons of a SSID of a certain SP as empty boxes in the upper horizontal line of the upper part o Fig. 2. Below there is illustrated a first way how to incorporate two additional SSIDs, one being indicated by a box filled with vertical lines and the other one being indicated by a box filled with horizontal lines. The first one is transmitted at timing T=1, the second one at the timing T=2. This means that for n different SSIDs the repeat interval between a certain beacon increases by n times which leads to delays and is disadvantageous e.g. in cases of roaming.

In Fig. 2, below the example described before there is shown another approach where shortly after T=0 there is sent the second beacon (indicated by the dashes box filled with vertical lines) and then thereafter there is send the third type of beacon (indicated by the dashes box filled with horizontal lines). This means that after T=0 and before T=1 all three types of beacons are sent, and therefore the density of the beacons over time increases.

In both situations, it is clearly inefficient to keep broadcasting SSIDs every 10s of ms, even when some of them are almost never used: an exemplary situation is that of a network provider in country X, supporting services of provider Y. The APs of the provider in country X have to advertise Y's SSID every 10/100ms, even if customers of provider Y rarely visit country X.

To overcome this problem of inefficiency, the solution implemented in Cisco Virtual LANs uses primary and secondary SSIDs, Primary SSIDs are the one advertised by the APs and overheard by the mobile nodes. The mobile nodes then send probe requests asking the APs for specific (secondarylvirtual) SSIDs. Even though this solution solves the inefficiency problem, it still suffers the problem of the probe requests having to contend with all other traffic, including data traffic, before being sent over the channel. If the mobile node is a member of m virtual networks, it has to actively contend and probe for each of the m SSIDs one after the other, until it finds the desired SP.

A further approach is schematically illustrated also in Fig. 2 by the two additional SSIDs which are schematically indicated at position no. 4 in the beacon frame body. One could for example include multiple SSIDs at this location. Such a solution, however, would not be backward compatible.

The solution according to an embodiment of the invention replaces the SSID in broadcast beacons by a Bloom filter containing all SSIDs of supported service providers (SPs). The Bloom filter, which is a set of b bits, can be seen as a compressed list in which mobile nodes search for the desired SSID. Before getting into the details of an embodiment there a brief description of Bloom filters will be provided in the following.

A Bloom filter is a set of b bits in which one can check whether a given entry can be found. It should be noted that the complete list of entries cannot be retrieved, just the Boolean check whether an entry is there can be performed.

To include an entry in the Bloom filter (in our case the AP wanting to include a given SSID), a set of k hash functions are applied to the entry. The result of every hash function is a position in the b-bit filter, where the bit is set to 1 (all bits are initially set to 0). Every entry is input to the (k) hash functions, every hash function points to a position in tne (b-bit) Bloom filter, and this positions is set to 1.

To check whether an entry exists in the Bloom filter (in our case a mobile node checking whether a certain SSID is in the Bloom filter advertised by the AP), the reverse operation is performed: the entry is input to the same (k) hash functions, and the positions to which those hash functions are pointing are checked: if they are all 1s, one can conclude that the entry exists in the Bloom filter (which means the SSID is advertised by the AP).

False positives may occur using Bloom filters. For example it may happen that the bits for entry_3 are all checked as 1s, stating that entry_3 is within the filter, while it is actually not. This occurs when the bit positions of entry_3 are a combination of bit positions of different entries, e.g. entry_1 and entry_2. False positives using Bloom filters occur with probability:

$$\left(1 - e^{-km/b}\right)^k$$

where k is the number of hash functions, b is the filter size (in bits), and m is the number of entries included in the filter.

On the other hand, false negatives (where an entry is reported non-included in the filter while it actually is), never occur.

After this introduction of Bloom filters their application in an embodiment of the invention will now be explained in more detail.

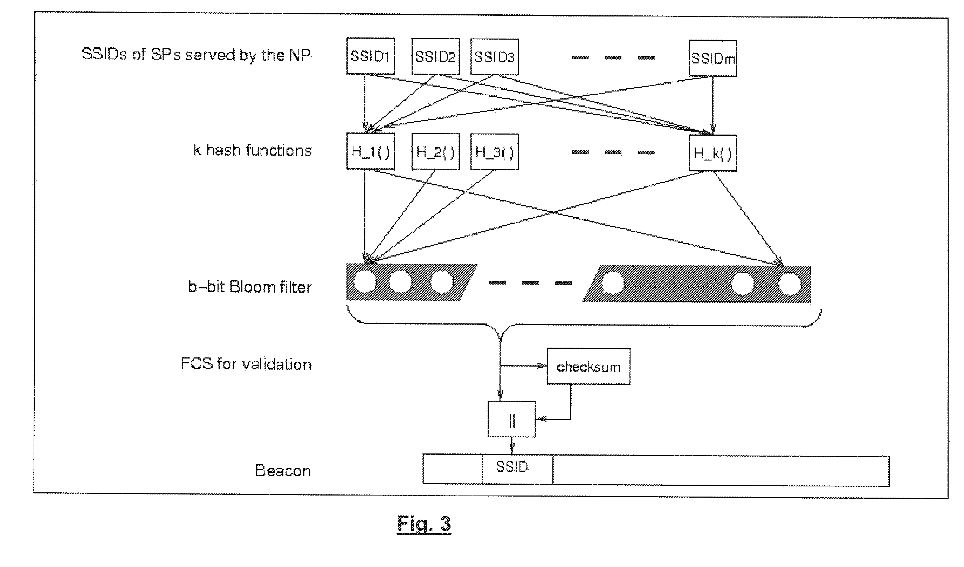

In one embodiment a Bloom filter is used as a compressed list of SSIDs that an AP wants to broadcast. Each service provider i, supported by the network provider, has an SSID_i. The network provider inputs all SSIDs to the k hash functions (see Fig. 3), where each function points to a given position of the b-bit Bloom filter, and the bit at that position is set to 1. The resulting Bloom filter is a "compressed list" of SSIDs where a mobile node can check whether SSID_i is therein or not, by making the bit-checks at the positions corresponding to the hashes of SSiD_j.

This procedure is schematically illustrated in Fig. 3. There are m different SSIDs (SSID1 to SSDm) of m (or n) different service providers and all are using the infrastructure of the network provider NP. These service identifiers SSID now have to be advertised by the NP through a beacon, and for that purpose there is generated the b-bit bloom filter as follows. To each SSID there are applied the k hash functions h_1() to h_k(), and each result of the application of one of these hash functions points to one of the bits in the b-bit bloom filter. The thus identified bit is then set, so that the application of the k hash functions to SSID1 results in k bits being set. Then the same procedure is carried out for the second SSID (SSID2), and so on, up to the m-th SSID. This results then in p ≤ m x k bits being set in the b-bit bloom filter, and the result may be regarded as a combined list of SSIDs.

The resulting combined list of SSIDs (denoted hereinafter CSSIDs) is then concatenated to its checksum as indicated in Fig. 3. This checksum may be regarded as an indication based on which an overhearing station can check whether the SSID is a combination of several others (in other words a combined SSID indicative of a virtual network or just a "normal" SSID) or not.

The most simple way to indicate whether the SSID is a "normal SSID" or indicative of a virtual network (a "combined SSID") would be to reserve one bit which is set for virtual networks and not set for non-virtual networks. However, it may happen that such a bit is set by chance just by a normal SSID in a "classical" legacy network, and therefore this approach is not so preferable. A better solution is to use a "real" checksum being calculated based on the bit sequence of the combined SSID using some checksum generation algorithm. One possibility would be to use a hash function, but any other algorithm which produces a predictable and reproducible result based on the CSSID and which can be used as checksum may be used as well, such as CRC-8, CRC-32. With such a "real" checksum generation algorithm it is extremely unlikely that by chance it happens that a "normal SSID" is mistaken as an indication of a virtual network (or as a CSSID). In one embodiment there is a predefined length of b-bits for the bloom filter (the CSSID) and further a defined length of p bits for the checksum, so that a mobile node which receives the advertisement knows where it has to look for the SSID and where for the checksum in the beacon which it receives.

The concatenation of the combined SSID and the checksum, i.e. (CSSIDs ‖ checksum), is then put into the SSID field of the beacons (as shown in the bottom of Fig. 3) to be regularly broadcast by the AP.

Mobile nodes with virtual networking capability can then (passively) get the (CSSIDs ‖ checksum). In one embodiment they then first check if checksum = checksum(CSSIDs) by applying the checksum generation algorithm (which by definition they know as nodes which have virtual network capability according to an embodiment of the invention) to what they assume to be the CSSID. If the result matches with the checksum of the received beacon, the mobile node knows it is a combination of virtual SSIDs and not a non-virtual network SSID (with a low error probability). It then proceeds to check whether his SSID (the SSID it is looking for) is in the CSSIDs. For that purpose it applies the hashing functions just in the same way as described above, in other words, in a way as if it would like to generate the b-bit bloom filter based on the SSID which it is looking for. This results then in k bits being set in the resulting b-bit bloom filter (because the bloom filter uses k hash functions), and these k bits are then checked as to whether their corresponding bits in the b-bit bloom filter which was received with the beacon are also set. If this is the case, the mobile node which has received the beacon may conclude that the service provider corresponding to the SSID which he was looking for was advertised by the AP and can therefore is available so that the mobile node may connect to it. This checking operation is then repeated for all SSIDs to which the mobile node may belong or which the mobile node is looking for (e.g. in case of the mobile node being subscribed to several service providers it may look for multiple SSIDs).

It will be appreciated that the passive overhearing of (CSSIDs ‖ checksum) makes the checks, and therefore the overall mobile node association is faster compared to the prior art method relying on sending a probe request for every SSID. Probe requests typically contend with other traffic, including data traffic, which may increase the association delays, and which may severely degrade the performance while roaming.

As for mobile nodes with no virtual networking capability, they regard the advertised (CSSIDs ‖ checksum) as a regular SSID to which they can associate.

However, since a mobile node without virtual network capability cannot identify the "true" SSID behind the CSSIDs, one possibility would be to alternately advertise CSSIDs and the "classical SSID" of the network provider. For example, every one, or two, or n beacons which are containing the CSSID there may be advertised the SSID of the SPs in the classical way so that the normal mobile nodes may still find SSIDs that are normally combined with others and can connect to the AP using this SSID.

This is e.g. applicable if a mobile is searching for an specific SSIS (like SSID= DOCOMO), and this mobile does not support virtualization in order to read it in the combined SSID, e.g. because the mobile is not upgraded yet by the operator. Then one possible solution according to one embodiment is to alternate between normal SSIDs and combined ones at very (or relatively) large time intervals. Ithis is a kind of an intermediate solution between 100% normal (non-combined) SSIDs and 100% combined SSIDs.)

Another possibility would be that the mobile node which mistakes the CSSIDs as normal SSID just tries to connect to a service provider as if the CSSIDs were a normal SSID. This request can be handled then by tne AP e.g. such that it sends in unicast the "real SSID" or the choice of available networks to the mobile node so that the mobile node may then initiate a connection.

The identity of the network provider (NP) has been so far invisible to mobile nodes overhearing (CSSIDs ‖ checksum). The NP ID can be optionally requested by the mobile nodes using additional probe requests, to which the reply contains the NP ID.

Finally, it is emphasize fact that the embodiments described before require software changes only, whether on the AP side or on the mobile node side. Roughly speaking, the check (SSID_of_mobile node =? SSID_broadcasted_by_AP), is replaced by the check (SSID_of_mobile node in? CSSIDs) in the device driver, after checking if checksum =? checksum(CSSIDs). The processing cost of the (SSID_of_mobile node in? CSSIDs) check is equal to the processing cost of the k hash functions, which is typically negligible, and there is no additional network load despite the beacons advertise more than one SP.

To give an example of the gains and the false positives of the proposed method there will be given an example of standard IEEE 802.11 networks to which there is applied the aggregated beaconing method.

A beacon is typically 50 bytes long. When transmitted at 1 Mbps, it takes 0.4ms. When a NP supports for example 50 SPs, it has to advertise 50 SSIDS. If advertised separately (1 SSID/beacon, to remain backward compatible), it takes 20ms which is 20% of the beacon period. With the proposed method the aggregated SSIDs fit the SSID field in a single beacon, therefore taking 0.4ms, i.e. 0.4% of the beaconing period.

As previously mentioned, the proposed method is backward compatible in the sense that mobile nodes with no virtual networking capability can still coexist with virtual networking capable ones and operate without requiring any changes to their software/hardware. This is due to:

- No changes to the standard beacon format required by the proposed method
- No changes to the standard protocol operation, i.e. beaconing, association requests, association, data transmission, and disassociation.

The implementation of the proposed method can be performed by updating the software of the network provider's AP and the service provider's nodes such as to support the proposed method for SSID combination.

It will be understood that in the foregoing explanation was made in connection with IEEE 802.11 networks, the principle idea can be applied to any other networks as well, and the service provider identifiers need not to be SSIDs in the sense of IEEE 802.11 networks.

## Claims

1. A network node for implementing a virtual network in which said network node offers a plurality of m service providers to which another node may connect, m being a natural number larger than zero, said service providers having correspondingly different service provider identifiers, said network node comprising:

   a module for applying a plurality of k hash functions to each of said service provider identifiers, such that each of said k hash function when being applied to a certain service provider identifier points to one bit in a sequence of b bits which then is set by said module, k and m being a natural number larger than zero, said sequence of b bits thereby forming a compressed indication of the service provider identifiers offered by said network node; and
   a module for repeatedly transmitting a beacon comprising said compressed indication of the service provider identifiers to advertise the service providers offered by said network node.

2. The network node of claim 1, further comprising:

   a module for generating a checksum using a checksum generating algorithm based on said compressed indication of the service provider identifiers, and for including said checksum into the beacon transmitted by said node.

3. The network node of claim 1 or 2, further comprising:

   a module for, if a mobile node tries to connect to a service provider based on said compressed indication of the service provider identifiers as if it were an indication of a single service provider, forwarding to said mobile node by unicast an indication of the service providers which are available at said network node.

4. A node which may connect to a network node implementing a virtual network in which said network node offers a plurality of m service providers to which said node may connect, m being a natural number larger than zero, said service providers having correspondingly different service provider identifiers, said node comprising:

   a module for overhearing beacons transmitted by said network node for advertising said plurality of service providers, wherein said network node further comprises:

   a module for applying a plurality of k hash functions to the service provider identifier to which said node wishes to connect, such that each of said k hash function when being applied to said service provider identifier points to one bit in a sequence of b bits, k and m being a natural number larger than zero comparing the bits thus being set with the corresponding bits in a sequence of b bits in the beacon received from said network node, said b bits of said beacon forming a compressed indication of the service provider identifiers offered by said network node, and if said module detects that said bits are set, concluding that the service provider corresponding to said service provider identifier is offered by said network node; wherein said module for applying is adapted to repeat the application of said k hash functions and said comparing of said bits for each of the service provider identifiers corresponding to a service provider to which said node wishes to connect; and
   trying to establish a connection with one of the service providers for which it has been conclude that they are offered by said network node.

5. The node of claim 4 further comprising:

   a module for identifying in the beacon received from said network node those b bits which are a compressed indication of the service provider identifiers of the service providers offered by said network node, said module being further adapted for generating a checksum using a checksum generating algorithm based on said compressed indication of the service provider identifiers, and for comparing said generated checksum with the corresponding checksum in the beacon transmitted by said node, and
   if the two checksums are identical, concluding that said compressed indication of the service provider identifiers is indeed an indication of a plurality of service providers.

6. The node of claim 4 or 5, further comprising:

   a module for, if a said node tries to connect to a service provider based on said compressed indication of the service provider identifiers as if it were an indication of a single service provider but fails since it is actually indicative of multiple service providers, receiving by said mobile node by unicast an indication of the service providers which are available at said network node from said network node.

7. A method for implementing a virtual network in which a network node offers a plurality of m service providers to which another node may connect, m being a natural number larger than zero, said service providers having correspondingly different service provider identifiers, said method comprising:

applying a plurality of k hash functions to each of said service provider identifiers, such that each of said k hash function when being applied to a certain service provider identifier points to one bit in a sequence of b bits which then is set by said module, k and m being a natural number larger than zero, said sequence of b bits thereby forming a compressed indication of the service provider identifiers of the service providers offered by said network node; and

repeatedly transmitting a beacon comprising said compressed indication of the service provider identifiers to advertise the service providers offered by said network node.

8. The method of claim 7, further comprising:

generating a checksum using a checksum generating algorithm based on said compressed indication of the service provider identifiers, and for including said checksum into the beacon transmitted by said node.

9. The method of claim 7 or 8, further comprising:

if a mobile node tries to connect to a service provider based on said compressed indication of the service provider identifiers as if it were an indication of a single service provider, forwarding to said mobile node by unicast an indication of the service providers which are available at said network node.

10. A method for connecting a node to a network node implementing a virtual network in which said network node offers a plurality of m service providers to which said node may connect, m being a natural number larger than zero, said service providers having correspondingly different service provider identifiers, said method comprising:

overhearing beacons transmitted by said network node for advertising said plurality of service providers, wherein said method further comprises:

applying a plurality of k hash functions to the service provider identifier of the service provider to which said node wishes to connect, such that each of said k hash function when being applied to said service provider identifier points to one bit in a sequence of b bits, k and m being a natural number larger than zero,

comparing the bits thus being set with the corresponding bits in a sequence of b bits in the beacon received from said network node, said b bits of said beacon forming a compressed indication of the service provider identifiers of the service providers offered by said network node, and if it is detected that said bits are set, concluding that the service provider corresponding to said service provider identifier is offered by said network node;

repeating the application of said k hash functions and said comparing of said bits for each of the service provider identifiers corresponding to a service provider to which said node wishes to connect; and

trying to establish a connection with one of the service s for which it has been concluded that they are offered by said network node.

11. The method of claim 10 further comprising:

identifying in the beacon received from said network node those b bits which are a compressed indication of the service identifiers of the services offered by said network node,

generating a checksum using a checksum generating algorithm based on said compressed indication of the service identifiers,

comparing said generated checksum with the corresponding checksum in the beacon transmitted by said node, and

if the two checksums are identical, concluding that said compressed indication of the service identifiers is indeed an indication of a plurality of services.

12. The method of claim 10 or 11, further comprising:

if said node tries to connect to a service based on said compressed indication of the service identifiers as if it were an indication of a single service but fails since it is actually indicative of multiple services, receiving by said mobile node by unicast an indication of the services which are available at said network node from said network node.

13. A computer program comprising computer program code which when being executed on a computer enables said computer to carry out a method according to one of claims 7 to 12.

**Amended claims in accordance with Rule 137(2) EPC.**

**1.** A network node for implementing a virtual network in which said network node is adapted to offers a plurality of m service providers to which another node may connect, m being a natural number larger than zero, said service providers having correspondingly different service provider identifiers, said network node comprising:

a module adapted to apply a plurality of k hash functions to each of said service provider identifiers, such that each of said k hash function when being applied to a certain service provider identifier points to one bit in a sequence of b bits which then is set by said module, k and m being a natural number larger than zero, said sequence of b bits thereby forming a compressed indication of the service provider identifiers offered by said network node; and
a module adapted to repeatedly transmit a beacon comprising said compressed indication of the service provider identifiers to advertise the service providers offered by said network node.

**2.** The network node of claim 1, further comprising:

a module adapted to generate a checksum using a checksum generating algorithm based on said compressed indication of the service provider identifiers, and for including said checksum into the beacon transmitted by said network node.

**3.** The network node of claim 1 or 2, further comprising:

a module adapted to, if a mobile node tries to connect to a service provider based on said compressed indication of the service provider identifiers as if it were an indication of a single service provider, forward to said mobile node by unicast an indication of the service providers which are available at said network node.

**4.** A node which may connect to a network node implementing a virtual network in which said network node is adapted to offers a plurality of m service providers to which said node may connect, m being a natural number larger than zero, said service providers having correspondingly different service provider identifiers, said node comprising:

a module adapted to overhear beacons transmitted by said network node for advertising said plurality of service providers, wherein said network node further comprises:

a module adapted to apply a plurality of k hash functions to the service provider identifier to which said node wishes to connect, such that each of said k hash function when being applied to said service provider identifier points to one bit in a sequence of b bits, k and m being a natural number larger than zero, and adapted to compare the bits thus being set with the corresponding bits in a sequence of b bits in the beacon received from said network node, said b bits of said beacon forming a compressed indication of the service provider identifiers -offered by said network node, and if said module adapted to apply detects that said bits are set, concluding that the service provider corresponding to said service provider identifier is offered by said network node;

wherein said module for applying is adapted to repeat the application of said k hash functions and said comparing of said bits for each of the service provider identifiers corresponding to a service provider to which said node wishes to connect; and
trying to establish a connection with one of the service providers for which it has been concluded that they are offered by said network node.

**5.** The node of claim 4 further comprising:

a module adapted to identify in the beacon received from said network node those b bits which are a compressed indication of the service provider identifiers of the service providers offered by said network node, said module being further adapted for generating a checksum using a checksum generating algorithm based on said compressed indication of the service provider identifiers, and for comparing said generated checksum with the corresponding checksum in the beacon transmitted by said network node, and
if the two checksums are identical, concluding that said compressed indication of the service provider identifiers is indeed an indication of a plurality of service providers.

**6.** The node of claim 4 or 5, further comprising:

a module adapted to, if a said node tries to connect to a service provider based on said compressed indication of the service provider identifiers as if it were an indication of a single service provider but fails since it is actually indicative of multiple service providers, receive by said mobile node by unicast an indication of the service providers which are available at said network node from said network node.

**7.** A method for implementing a virtual network in which a network node offers a plurality of m service providers to which another node may connect, m being a natural number larger than zero, said service providers having correspondingly different service provider identifiers, said method comprising:

applying a plurality of k hash functions to each of said service provider identifiers, such that each of said k hash function when being applied to a certain service provider identifier points to one bit in a sequence of b bits which then is set, k and m being a natural number larger than zero, said sequence of b bits thereby forming a compressed indication of the service provider identifiers of the service providers offered by said network node; and

repeatedly transmitting a beacon comprising said compressed indication of the service provider identifiers to advertise the service providers offered by said network node.

**8.** The method of claim 7, further comprising:

generating a checksum using a checksum generating algorithm based on said compressed indication of the service provider identifiers, and for including said checksum into the beacon transmitted by said network node.

**9.** The method of claim 7 or 8, further comprising:

if a mobile node tries to connect to a service provider based on said compressed indication of the service provider identifiers as if it were an indication of a single service provider, forwarding to said mobile node by unicast an indication of the service providers which are available at said network node.

**10.** A method for connecting a node to a network node implementing a virtual network in which said network node offers a plurality of m service providers to which said node may connect, m being a natural number larger than zero, said service providers having correspondingly different service provider identifiers, said method comprising:

overhearing beacons transmitted by said network node for advertising said plurality of service providers, wherein said method further comprises:

applying a plurality of k hash functions to the service provider identifier of the service provider to which said node wishes to connect, such that each of said k hash function when being applied to said service provider identifier points to one bit in a sequence of b bits, k and m being a natural number larger than zero,

comparing the bits thus being set with the corresponding bits in a sequence of b bits in the beacon received from said network node, said b bits of said beacon forming a compressed indication of the service provider identifiers of the service providers offered by said network node, and if it is detected that said bits are set, concluding that the service provider corresponding to said service provider identifier is offered by said network node;

repeating the application of said k hash functions and said comparing of said bits for each of the service provider identifiers corresponding to a service provider to which said node wishes to connect; and

trying to establish a connection with one of the service providers for which it has been concluded that they are offered by said network node.

**11.** The method of claim 10 further comprising:

identifying in the beacon received from said network node those b bits which are a compressed indication of the service identifiers of the services offered by said network node,

generating a checksum using a checksum generating algorithm based on said compressed indication of the service identifiers,

comparing said generated checksum with the corresponding checksum in the beacon transmitted by said node, and

if the two checksums are identical, concluding that said compressed indication of the service identifiers is indeed an indication of a plurality of services.

**12.** The method of claim 10 or 11, further comprising:

if said node tries to connect to a service based on said compressed indication of the service identifiers as if it were an indication of a single service but fails since it is actually indicative of multiple services, receiving by said mobile node by unicast an indication of the services which are available at said network node from said network node.

**13.** A computer program comprising computer program code which when being executed on a computer enables said computer to carry out a method according to one of claims 7 to 12.

Fig. 1

| Octets: 2 | 2 | 6 | 6 | 6 | 2 | 0 - 2312 | 4 |
|---|---|---|---|---|---|---|---|
| Frame Control | Duration | DA | SA | BSSID | Sequence Control | Frame Body | FCS |

MAC Header

—Beacon frame body

| Order | Information | Notes |
|---|---|---|
| 1 | Timestamp | |
| 2 | Beacon interval | |
| 3 | Capability information | |
| 4 | SSID | |
| 5 | Supported rates | |
| 6 | FH Parameter Set | The FH Parameter Set information element is present within Beacon frames generated by STAs using frequency-hopping PHYs. |
| 7 | DS Parameter Set | The DS Parameter Set information element is present within Beacon frames generated by STAs using direct sequence PHYs. |
| 8 | CF Parameter Set | The CF Parameter Set information element is only present within Beacon frames generated by APs supporting a PCF. |
| 9 | IBSS Parameter Set | The IBSS Parameter Set information element is only present within Beacon frames generated by STAs in an IBSS. |
| 10 | TIM | The TIM information element is only present within Beacon frames generated by APs. |

too slow, especially for roaming

inefficient, useless interference

not backward compatible

T = 0    T = 1    T = 2    T = 3

time

| Octets: 2 | 2 | 6 | 6 | 6 | 2 | 0 - 2312 | 4 |
|---|---|---|---|---|---|---|---|
| Frame Control | Duration | DA | SA | BSSID | Sequence Control | Frame Body | FCS |

MAC Header

**Fig. 2**

Table 5—Beacon frame body

| Order | Information | Notes |
|---|---|---|
| 1 | Timestamp | |
| 2 | Beacon interval | |
| 3 | Capability information | |
| 4 | SSID | |
| 5 | Supported rates | |
| 6 | FH Parameter Set | The FH Parameter Set information element is present within Beacon frames generated by STAs using frequency-hopping PHYs. |
| 7 | DS Parameter Set | The DS Parameter Set information element is present within Beacon frames generated by STAs using direct sequence PHYs. |
| 8 | CF Parameter Set | The CF Parameter Set information element is only present within Beacon frames generated by APs supporting a PCF. |
| 9 | IBSS Parameter Set | The IBSS Parameter Set information element is only present within Beacon frames generated by STAs in an IBSS. |
| 10 | TIM | The TIM information element is only present within Beacon frames generated by APs. |

SSIDs of SPs served by the NP    SSID1   SSID2   SSID3    — — —    SSIDm

k hash functions    H_1( )   H_2( )   H_3( )    — — —    H_k( )

b–bit Bloom filter

FCS for validation    checksum

||

Beacon    SSID

**Fig. 3**

Europäisches
Patentamt

European
Patent Office

Office européen
des brevets

## EUROPEAN SEARCH REPORT

**Application Number**

EP 08 16 4741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/086705 A (LG ELECTRONICS INC [KR]; YUN CHAN PHILL [KR]; RYU SEUNG HYUP [KR]; YAN) 2 August 2007 (2007-08-02) | 1,3,4,6, 7,9,10, 12,13 | INV. H04W48/12 H04L29/06 |
| A | * page 11; table 8 * <br> * claims 2,11,12 * <br> * paragraph [0016] * <br> * paragraph [0031] - paragraph [0033] * <br> * paragraph [0045] * <br> * paragraph [0053] * <br> * paragraph [0068] - paragraph [0069] * <br> * paragraph [0112] * <br> * paragraph [0116] * <br> * paragraph [0128] * <br> * paragraph [0139] - paragraph [0140] * <br> ----- | 2,5,8,11 | |
| X | WO 2008/037298 A (ERICSSON TELEFON AB L M [SE]; YLITALO JUKKA [FI]; SALMELA PATRIK [FI];) 3 April 2008 (2008-04-03) | 1,2,4,5, 7,8,10, 11 | |
| A | * page 2, line 1 - line 19 * <br><br> * page 3, line 10 - line 30 * <br> * page 4, line 1 - line 20 * <br> * page 4, line 33 - line 34 * <br> * page 5, line 1 - line 10 * <br> * page 6, line 21 - line 32 * <br> * page 7, line 21 - line 28 * <br> * page 10, line 24 - line 29 * <br> * abstract * <br> * claims 1,2,7-9 * <br> ----- | 3,6,9, 12,13 | TECHNICAL FIELDS SEARCHED (IPC) <br><br> H04W <br> H04L |

The present search report has been drawn up for all claims

| Place of search | Date of completion of the search | Examiner |
|---|---|---|
| Munich | 1 December 2008 | Camba, Sonia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 08 16 4741

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2008

| Patent document cited in search report | | Publication date | Patent family member(s) | Publication date |
|---|---|---|---|---|
| WO 2007086705 | A | 02-08-2007 | NONE | |
| WO 2008037298 | A | 03-04-2008 | NONE | |